# FASCICULE DE BREVET EUROPEEN

(11) **EP 1 282 795 B1**
(45) Date de publication et mention de la délivrance du brevet: **30.03.2005**
(21) Numéro de dépôt: 01931301.4
(22) Date de dépôt: 18.05.2001
(51) Int. Cl.: F16K 3/28, F16K 3/24

(54) **PISTON, NOTAMMENT POUR VANNE DE SOUTIRAGE**
KOLBEN FÜR ENTNAHMEVENTIL
PISTON, IN PARTICULAR FOR SAMPLING VALVE

(30) Priorité: 19.05.2000 CH 101500
(43) Date de publication de la demande: 12.02.2003
(73) Titulaire: Favre, Pascal, 1028 Préverenges (CH)
(72) Inventeur: Favre, Pascal, 1028 Préverenges (CH)
(74) Mandataire: Ganguillet, Cyril
(86) Numéro de dépôt international: PCT/CH2001/000309
(87) Numéro de publication internationale: WO 2001/088416

(56) Documents cités:
- CH-A- 364 670
- DE-A- 3 109 350
- US-A- 3 747 479

## Description

La présente invention concerne un piston, notamment pour vanne de soutirage.

Dans certains secteurs techniques, notamment dans l'industrie chimique, il existe un besoin pour des vannes devant équiper des tubulures de soutirage raccordées à des récipients contenant des liquides ou des poudres. Ces vannes sont nécessaires, par exemple pour effectuer des prises d'échantillons au cours de processus de fabrication. Le brevet CH 637456 décrit une réalisation d'un piston équipant une telle vanne. Ce piston comprend un corps de piston recouvert extérieurement d'une enveloppe extensible, une vis de déplacement pourvue de moyens d'entraînement en rotation et coopérant avec un écrou solidaire du corps de piston pour déplacer ce dernier en réponse aux rotations de la vis, et un dispositif dilateur lié au piston et provoquant en fin de course une dilatation de l'enveloppe.

Bien que la construction décrite dans ce brevet réponde dans une certaine mesure aux besoins, il est apparu qu'elle présentait une complexité exagérée et des difficultés de fabrication. D'autre part, il s'est avéré que l'enveloppe externe 18 en matière déformable de ce piston flambe lorsque le piston est comprimé en fin de course avant, ce qui entraîne des pertes d'étanchéité.

La présente invention a donc pour but d'apporter des perfectionnements à un piston tel que celui faisant l'objet du brevet précité.

Dans ce but, la présente invention concerne un piston du type décrit ci-dessus et dans lequel le dispositif dilateur comporte un disque dilateur et un tirant ayant une extrémité solidaire du disque, la vis présentant d'une part un logement longitudinal dans lequel le tirant est engagé et d'autre part à son extrémité avant une butée qui coopère en fin de course avec une collerette du tirant située à son extrémité arrière, de manière à provoquer un serrage du disque dilateur contre l'extrémité du corps de piston et une expansion radiale localisée de l'enveloppe.

Selon un mode d'exécution, le dispositif dilateur comprend un anneau expansible disposé entre l'extrémité du corps de piston et le disque dilateur. Le disque dilateur peut présenter à cet effet un prolongement tubulaire engagé dans une saignée interne du corps de piston, à son extrémité avant de manière que l'anneau d'expansion soit entièrement compris entre des surfaces radiales ou axiales du corps de piston, du disque dilateur et de l'enveloppe.

L'anneau d'expansion peut être en élastomère ou en caoutchouc, ou constitué d'un anneau-bloc en deux parties accolées avec une surface de contact tronconique, l'enveloppe flexible pouvant être réalisée en téflon ou tout autre matériau élastique (acier ou plastique).

L'enveloppe du piston peut comporter une partie tubulaire ajustée au diamètre du corps de piston, une partie extrême avant en forme de disque adjacente au disque dilateur et à son extrémité arrière un bourrelet interne de retenue, engagé dans une gorge du corps de piston.

La butée peut être constituée par une pièce annulaire vissée à l'entrée du logement de la vis.

Des moyens peuvent être prévus pour guider le piston longitudinalement dans un corps de vanne tubulaire.

Selon une variante d'exécution, la solidarisation de l'enveloppe et du corps de piston est réalisée par vissage de l'extrémité arrière de l'enveloppe sur le corps de piston.

On va décrire ci-après, à titre d'exemple, deux formes d'exécution de l'objet de l'invention, représentées par le dessin annexé, dont :
La fig. 1 est une vue en coupe longitudinale d'une première forme d'exécution du piston en position arrière,
La fig. 2 une vue semblable à la fig. 1 montrant le piston en position avant, et
La fig. 3 est une vue en coupe longitudinale d'une seconde forme d'exécution du piston en position avant.

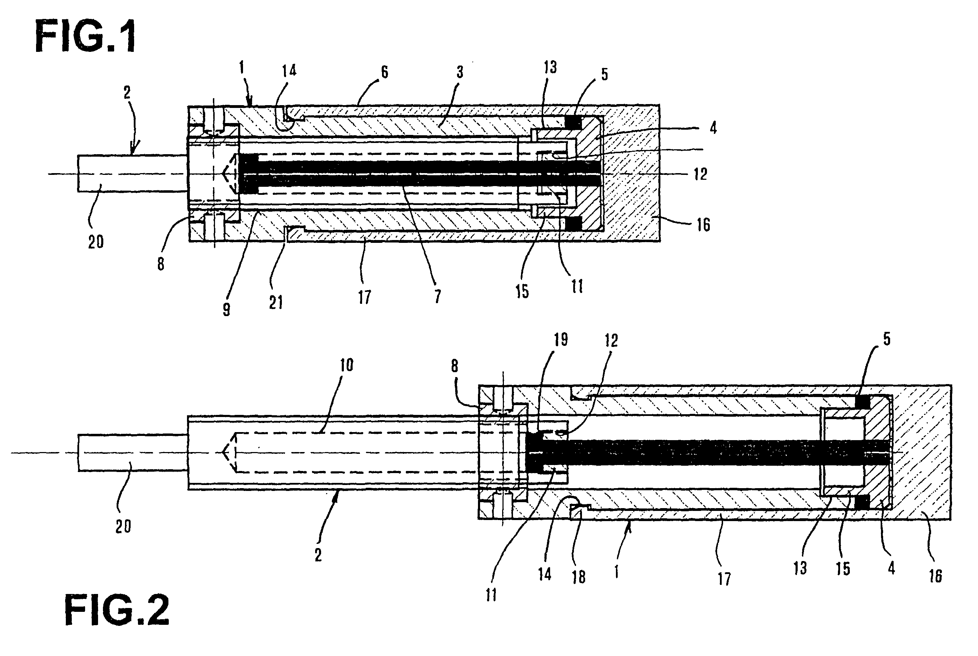

Le piston représenté aux fig. 1 et 2 se compose de deux parties principales: Un ensemble mobile 1 et une vis de déplacement 2. L'ensemble mobile comporte un corps de piston 3, un disque dilateur 4, un anneau d'expansion 5, une enveloppe flexible 6, un tirant 7 et un écrou 8. Quant à la vis de déplacement 2, elle est formée d'une pièce cylindrique avec un filetage extérieur 9 correspondant au taraudage de l'écrou 8 et un logement longitudinal 10 qui s'étend axialement dans la vis depuis son extrémité avant sur une partie de sa longueur et présente un segment taraudé 12 à son extrémité avant. Dans ce taraudage est vissée une butée annulaire 11.

Le corps de piston 3 est de préférence une pièce métallique. Il est de forme tubulaire avec un alésage interne lisse, présentant une saignée à son extrémité arrière, dans laquelle est fixé l'écrou 8 et une seconde saignée 13 à son extrémité avant.

La face externe du corps de piston 3 est également cylindrique avec une gorge 14 au voisinage de son extrémité arrière, le diamètre de la partie arrière étant légèrement plus grand que celui de la partie avant.

Le disque dilateur 4 est pourvu d'une paroi cylindrique 15 sur son côté arrière, les dimensions de cette paroi étant telles qu'elles permettent un coulissement du disque dans la saignée 13 en provoquant la compression axiale de l'anneau d'expansion 5 et son gonflement.

L'enveloppe flexible 6 est par exemple en téflon. Son fond épais 16 recouvre la face avant du disque dilateur 4 et sa paroi mince cylindrique 17 recouvre étroitement la périphérie du disque dilateur 4, la face externe de l'anneau 5 et celle du corps de piston 3 jusqu'à la gorge 14. Un bourrelet interne 18 de l'enveloppe 6 est engagé dans la gorge 14 de manière à la solidariser au corps de piston 3. Comme représenté à la fig. 1, la longueur de ce bourrelet 18 est inférieure à la largeur de la gorge 14, de sorte qu'en position arrière du piston, un jeu subsiste entre l'extrémité arrière de l'enveloppe 16 et le rebord avant 21 de la partie arrière du corps de piston. Ce jeu correspond sensiblement à la diminution d'épaisseur de l'anneau 5 lorsqu'il est comprimé en fin de course du piston, de sorte que l'enveloppe flexible ne subit pratiquement aucune compression longitudinale et reste ainsi constamment en appui contre la face avant du disque dilateur 4. Bien entendu, la solidarisation de l'enveloppe flexible 6 avec le corps du piston peut également être réalisée par tous autres moyens équivalents au clipsage bourrelet/gorge, comme par exemple à l'aide d'une bague ouverte prisonnière d'une part de la gorge du piston et d'autre part d'une rainure de l'enveloppe flexible, ou encore par vissage à travers un ou plusieurs trous oblongs de l'enveloppe.

Finalement le tirant 7 est fixé à son extrémité avant par vissage, chassage ou soudage dans une ouverture centrale du disque 4, et présente à son extrémité arrière une collerette 19 ajustée avec jeu à l'alésage du logement 10 de la vis 2.

Le montage et le fonctionnement du piston résultent de la comparaison entre les fig. 1 et 2.

L'ensemble mobile 1 coulisse dans un support tubulaire, par exemple un corps cylindrique d'une vanne de soutirage alors que la vis 2 est supportée et guidée en rotation grâce à son prolongement axial 20, dans un embout fixe (non représenté) solidaire du corps de vanne. Ce prolongement 20 sert en outre de moyen de fixation pour un volant, une manivelle ou tout autre organe d'entraînement en rotation.

A partir de la position extrême arrière de la fig. 1 une rotation de la vis 2 entraîne un déplacement de l'ensemble 1 vers l'avant. On notera que des moyens peuvent être prévus pour empêcher une rotation du piston, par exemple des vis de blocage de l'écrou 8 dans son taraudage peuvent présenter une tête saillante, coulissant dans une rainure longitudinale du corps de vanne.

La position finale de l'ensemble mobile 1 sera atteinte lorsque, comme on le voit à la fig. 2, la collerette 19 du tirant 7 arrivera en appui sur la butée 11. Dès lors la rotation de la vis 2 entraîne un mouvement relatif entre le corps de piston 3 et le disque dilateur 4 avec compression de l'anneau 5, lequel est retenu sur trois de ses quatre faces et ne peut que se gonfler radialement, en entraînant une expansion de la partie voisine de l'enveloppe 6. Le joint entre le piston et le corps de vanne est ainsi rendu parfaitement étanche alors qu'au cours du déplacement l'enveloppe flexible pouvait coulisser librement.

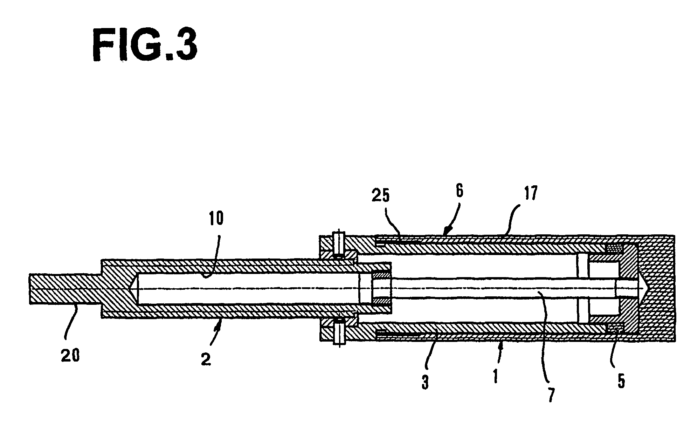

La seconde forme d'exécution représentée à la fig. 3 se distingue de la première forme d'exécution décrite ci-dessus en ce que la solidarisation de l'enveloppe flexible 6 avec le corps de piston 3 est réalisée par vissage 25 de l'extrémité arrière de la paroi intérieure de l'enveloppe flexible 6 sur le corps de piston. Selon une variante, non représentée sur le dessin, de cette forme d'exécution, l'extrémité de l'enveloppe flexible 6 peut être vissée non pas directement sur le corps de piston 3, mais sur une douille ou bague rapportée et pouvant coulisser longitudinalement le long du corps de piston.

Diverses modifications de la construction décrite sont possibles sans sortir du cadre de l'invention. Ainsi l'enveloppe flexible 6, au lieu d'être en téflon ou autre matière plastique présentant les mêmes caractéristiques, pourrait aussi être en un métal souple, par exemple en tantale.

L'anneau 5 pourrait être formé de deux pièces annulaires métalliques ayant des profils tronconiques complémentaires et constituer un anneau-bloc.

De même, l'anneau d'expansion 5 peut être remplacé par une conformation tronconique de la face arrière du disque dilateur 4 coopérant avec une conformation tronconique complémentaire de la face avant de la tête du piston, la tête du piston comportant des fentes longitudinales, de façon à permettre son expansion diamétrale lorsque sa face tronconique vient s'appuyer contre la surface tronconique du disque dilateur.

Pour le tirant, le corps de piston et le disque dilateur, on utilisera de préférence l'acier inoxydable.

La construction décrite comporte plusieurs avantages.

L'enveloppe en téflon ou métal souple est entièrement supportée par des parties rigides de l'ensemble mobile de sorte qu'elle résiste parfaitement à la pression.

Le nombre des pièces à assembler est réduit. Des opérations de soudage peuvent être supprimées.

Le remplacement d'un tube intermédiaire par le tirant engagé dans le logement de la vis simplifie la construction, l'usinage des éléments et le montage. Cette disposition améliore aussi la fiabilité du piston.

On notera enfin que l'anneau expansible de profil rectangulaire décrit pourrait aussi, le cas échéant être remplacé par un anneau de forme torique (O-ring).

## Revendications

1. Piston, notamment pour vanne de soutirage, comprenant un corps de piston (3) recouvert extérieurement d'une enveloppe extensible (6), une vis de déplacement (2) pourvue de moyens (20) d'entraînement en rotation et coopérant avec un écrou (8) solidaire du corps de piston (3) pour déplacer ce dernier en réponse aux rotations de la vis, et un dispositif dilateur lié au piston et provoquant en fin de course une dilatation de l'enveloppe (6), **caractérisé en ce que** le dispositif dilateur comporte un disque dilateur (4) et un tirant (7) ayant une extrémité solidaire du disque, et **en ce que** la vis (2) présente d'une part un logement longitudinal (10) dans lequel le tirant (7) est engagé et d'autre part à son extrémité avant une butée (11) qui coopère en fin de course avec une collerette (19) du tirant située à son extrémité arrière, de manière à provoquer un serrage du disque dilateur (4) contre l'extrémité du corps de piston et une expansion radiale dudit dispositif dilateur.

2. Piston selon la revendication 1, **caractérisé en ce que** le dispositif dilateur comprend un anneau expansible (5) disposé entre l'extrémité du corps de piston et le disque dilateur (4).

3. Piston selon la revendication 2, **caractérisé en ce que** le disque dilateur (4) présente un prolongement tubulaire (15) engagé dans une saignée interne (13) du corps de piston, à son extrémité avant de manière que l'anneau d'expansion (5) soit entièrement compris entre des surfaces radiales ou axiales du corps de piston (3), du disque dilateur (4) et de l'enveloppe (6) .

4. Piston selon la revendication 3, **caractérisé en ce que** l'anneau d'expansion (5) est en élastomère ou en caoutchouc.

5. Piston selon la revendication 3, **caractérisé en ce que** l'anneau d'expansion (5) est un anneau-bloc en deux parties accolées avec une surface de contact tronconique.

6. Piston selon la revendication 1, **caractérisé en ce que** l'enveloppe flexible (6) est en téflon .

7. Piston selon la revendication 1, **caractérisé en ce que** l'enveloppe (6) comporte une partie tubulaire (17) ajustée au diamètre du corps de piston (3), une partie extrême avant en forme de disque adjacente au disque dilateur (4) et à son extrémité arrière un bourrelet interne (18) de retenue, engagé dans une gorge (14) du corps de piston.

8. Piston selon la revendication 1, **caractérisé en ce que** l'enveloppe (6) comporte une partie tubulaire (17) ajustée au diamètre du corps de piston (3), une partie extrême avant en forme de disque adjacente au disque dilateur (4) et **en ce que** la solidarisation de l'enveloppe (6) et du corps de piston (3) est réalisée par vissage de l'extrémité arrière de l'enveloppe (6) sur le corps de piston (3).

9. Piston selon l'une des revendications 7 ou 8, **caractérisé en ce que** l'enveloppe flexible (6) est étroitement supportée par le disque dilateur et par le corps de piston.

10. Piston selon la revendication 1, **caractérisé en ce que** la butée (11) est une pièce annulaire vissée à l'entrée du logement (10) de la vis (2).

11. Piston selon la revendication 1, **caractérisé en ce que** des moyens sont prévus pour guider le piston longitudinalement dans un corps de vanne tubulaire.

## Patentansprüche

1. Kolben, insbesondere für ein Entnahmeventil mit einem Kolbenkörper (3), der außen mit einer elastischen Hülle (6) bedeckt ist, mit einer Stellschraube (2), die mit einer Einrichtung (20) zum Drehantrieb versehen ist und mit einer Mutter (8) zusammenwirkt, die fest mit dem Kolbenkörper (3) verbunden ist, um diesen in Antwort auf die Drehungen der Schraube zu verstellen, und mit einer Dehneinrichtung, die mit dem Kolben verbunden ist und am Ende des Verstellweges eine Dehnung der Hülle (6) hervorruft, **dadurch gekennzeichnet, dass** die Dehneinrichtung eine Dehnscheibe (4) und eine Spannstange (7) aufweist, die mit einem Ende der Scheibe fest verbunden ist, und dass die Schraube (2) einerseits eine longitudinale Aufnahme (10), in die die Spannstange (7) eingreift, und andererseits an ihrem vorderen Ende einen Anschlag (11) aufweist, der am Ende des Verstellweges mit einem Kragen (19) der Spannstange zusammenwirkt, der an deren hinterem Ende gelegen ist, um ein Anpressen der Dehnscheibe (4) gegen das Ende des Kolbenkörpers und eine radiale Dehnung der Dehneinrichtung hervorzurufen.

2. Kolben nach Anspruch 1, **dadurch gekennzeichnet, dass** die Dehneinrichtung einen dehnbaren Ring (5) aufweist, der zwischen dem Ende des Kolbenkörpers und der Dehnscheibe (4) angeordnet ist.

3. Kolben nach Anspruch 2, **dadurch gekennzeichnet, dass** die Dehnscheibe (4) eine rohrförmige in einen inneren Einschnitt (13) des Kolbenkörpers eingreifende Verlängerung an ihrem vorderen Ende aufweist, derart, dass der Dehnring (5) vollständig zwischen den radialen oder axialen Oberflächen des Kolbenkörpers (3), der Dehnscheibe (4) und der Hülle (6) aufgenommen ist.

4. Kolben nach Anspruch 3, **dadurch gekennzeichnet, dass** der Dehnring (5) aus Elastomer oder aus Kautschuk ist.

5. Kolben nach Anspruch 3, **dadurch gekennzeichnet, dass** der Dehnring (5) ein Ringblock aus zwei Teilen ist, die mit einer kegelstumpfförmigen Anlagefläche ausgerüstet sind.

6. Kolben nach Anspruch 1, **dadurch gekennzeichnet, dass** die elastische Hülle (6) aus Teflon ist.

7. Kolben nach Anspruch 1, **dadurch gekennzeichnet, dass** die Hülle (6) einen rohrförmigen Teil (17), der auf den Durchmesser des Kolbenkörpers (3) abgestimmt ist, einen vorderen Endteil in Form einer Scheibe benachbart zu der Dehnscheibe (4) und an ihrem hinteren Ende einen inneren Haltewulst (18) aufweist, der in eine Ausnehmung (14) des Kolbenkörpers eingreift.

8. Kolben nach Anspruch 1, **dadurch gekennzeichnet, dass** die Hülle einen rohrförmigen Teil (17), der auf den Durchmesser des Kolbenkörpers (3) abgestimmt ist und einen vorderen Endteil in Form einer Scheibe benachbart zu der Dehnscheibe (4) aufweist, und dass die Befestigung der Hülle (6) mit dem Kolbenkörper (3) durch eine Verschraubung des hinteren Endes der Hülle (6) auf dem Kolbenkörper (3) realisiert ist.

9. Kolben nach einem der Ansprüche 7 oder 8, **dadurch gekennzeichnet, dass** die elastische Hülle (6) eng durch die Dehnscheibe und durch den Kolbenkörper abgestützt ist.

10. Kolben nach Anspruch 1, **dadurch gekennzeichnet, dass** der Anschlag (11) ein ringförmiges Teil ist, das am Eingang der Aufnahme (10) der Schraube (2) verschraubt ist.

11. Kolben nach Anspruch 1, **dadurch gekennzeichnet, dass** Einrichtungen vorgesehen sind, um den Kolben in Längsrichtung in einem Körper eines rohrförmigen Ventiles zu führen.

## Claims

1. A piston, in particular for a draw-off valve, comprising a piston body (3) covered externally with an extensible casing (6), a displacement screw (2) provided with rotational driving means (20) and cooperating with a nut (8) immovably attached to the piston body (3) for displacement thereof in response to the rotations of the screw, and a dilating device linked to the piston and causing, at the limit of travel, a dilation of the casing (6), **characterised in that** the dilating device comprises a dilating disk (4) and a rod (7) having one end immovably attached to the disk, and **in that** the screw (2) has on the one hand a longitudinal housing (10) in which the rod (7) is fitted and on the other hand at its front end a limit stop (11) which cooperates at the limit of travel with a collar (19) of the rod situated at its back end, so as to cause a squeezing of the dilating disk (4) against the end of the piston body and a radial expansion of said dilating device.

2. A piston according to Claim 1, **characterised in that** the dilating device comprises an expansible ring (5) disposed between the end of the piston body and the dilating disk (4).

3. A piston according to Claim 2, **characterised in that** the dilating disk (4) has a tubular extension (15) fitted in an internal recess (13) in the piston body, at its front end so that the expansion ring (5) is entirely contained between radial or axial surfaces of the piston body (3), the dilating disk (4) and the casing (6).

4. A piston according to Claim 3, **characterised in that** the expansion ring (5) is made of elastomer or rubber.

5. A piston according to Claim 3, **characterised in that** the expansion ring (5) is a ring-block in two parts placed next to one another with a tapered contact surface.

6. A piston according to Claim 1, **characterised in that** the flexible casing (6) is made of Teflon.

7. A piston according to Claim 1, **characterised in that** the casing (6) comprises a tubular part (17) adjusted to the diameter of the piston body (3), a front extreme part in disk form adjacent to the dilating disk (4) and at its back end an internal retaining rim (18), fitted in a groove (14) in the piston body.

8. A piston according to Claim 1, **characterised in that** the casing (6) comprises a tubular part (17) adjusted to the diameter of the piston body (3), a front extreme part in disk form adjacent to the dilating disk (4), and **in that** the immovable attachment of the casing (6) and the piston body (3) is achieved by screwing the back end of the casing (6) onto the piston body (3).

9. A piston according to either of Claims 7 or 8, **characterised in that** the flexible casing (6) is closely supported by the dilating disk and by the piston body.

10. A piston according to Claim 1, **characterised in that** the limit stop (11) is an annular component screwed at the input of the housing (10) in the screw (2).

11. A piston according to Claim 1, **characterised in that** means are provided for guiding the piston longitudinally in a tubular valve body.
